# EUROPEAN PATENT SPECIFICATION

(11) **EP 0 483 288 B1**
(45) Date of publication and mention of the grant of the patent: **27.04.1994**
(21) Application number: 90917888.1
(22) Date of filing: 06.07.1990
(51) Int. Cl.: A23L 1/16, A23L 1/10, A23L 1/0528, A23L 1/308

(54) **PASTA WITH A HIGH CONTENT IN DIETARY FIBERS AND A REDUCED CONTENT IN CALORIES**
PASTE MIT HOHEM GEHALT AN DIÄTFASERN UND MIT VERMINDERTEM KALORIENGEHALT
PATES A TENEUR EN FIBRES DIETETIQUES ELEVEE ET A TENEUR EN CALORIES REDUITE

(30) Priority: 07.07.1989 IT 4816789
(43) Date of publication of application: 06.05.1992
(73) Proprietor: DICOFARM S.P.A., I-00191 Roma (IT)
(72) Inventor: CARAMELLI, Gianfranco, I-00124 Roma (IT)
(74) Representative: Massari, Marcello
(86) International application number: IT9000061
(87) International publication number: WO9100695

(56) References cited:
- EP-A- 211 732
- GB-A- 1 561 190
- GB-A- 2 010 656
- US-A- 3 843 818
- US-A- 4 269 863
- US-A- 4 379 173

## Description

This invention concerns a dietetic aliment in the form of an alimentary pasta with high contents in natural fibers and reduced contents in calories.

This invention concerns also the method for obtaining this aliment.

The aliments eaten by the largest part of the populations of the most developed countries are very lacking in fibers because of the procedures of refinement to which many of the base products of the nourishment are subjected.

Among these procedures there are: flour sifting, rice and other cereals and the like hulling.

This lack in fiber brings about two very serious inconveniences: the growing laziness of the intestine, and consequently, constipation, and the difficulty in reaching the sensation of satiety with a consequent lasting of the pangs of hunger even after eating a sufficient quantity of food from the point of view of the caloric requirements, with a consequent overalimentation.

These inconveniences - by themselves - and even more so if associated, are the main responsibles of serious lacks of balance, including an eccess of weight, until obesity, that afflicts a high percentage of persons belonging to the above mentioned populations. As it does not seem possible either re-educating the consumers to eat rough products, or, as a consequence, inducing the alimentary industries not to produce refined foods, modern dietetics, at present, aims at studying compositions of products containing natural alimentary fibers, and prescribing them as meals'fiber integrators.

One of the main, if not the most important, supplier of natural fibers, well known and available in a concentrated form, is glucomannan; applicant has included it as the fundamental ingredient of such fiber integrators.

Glucomannan is drawn from Amorphofallus Konjac, a tuber of Far East origin, which has the peculiarity of increasing its volume until 100 times its initial volume when soaked with water. Therefore, glucomannan is very satisfying even from the point of view of provoking the desired sense of satiety.

However, glucomannan, because of its tendency to loose its peculiarities of swelling when subjected to manipulationa and cooking, does not fit for making finished goods. All the attempts made up to now to produce glucomannan containing goods easily eatable and provided with alluring peculiarities of taste and flavour, have failed.

Therefore the administration of glucomannan has been made up to now almost exclusively in capsules and its confection of medicinal type does not attract the consumers to use it.

Applicant, on the contrary, has tested and got ready a composition of ingredients including glucomannan that when subjected to a procedure involving a precise succession of operations, allows an alimentary pasta to be produced, that fully satisfies the need to supply glucomannan fiber in an alluring and tasteful pleasant shape, without loosing its peculiarities.

Applicant has found that some compositions containing the ingredients quoted in the following example, in the indicated range of proportions, are suitable, when appropriately prepared and treated, to produce an alimentary pasta with a very good taste.

The general composition of the food of this application is as follows:
- Hard corn bran: 82÷88%
- Glucomannan: 3÷1%
- Fine bran of toasted hard corn: 15÷11%
- Water: 45÷55 kgs per 100 kgs of the above mixture.

In particular, applicant has tested that in order to get the best results, the following composition is the most suitable:
- Hard corn bran: 86%
- Glucomannan: 2%
- Fine bran of toasted hard corn: 12%

The metnod for obtaining the desired alimentary pasta, starting from the above quoted composition, comprises the following steps: a) adding fine bran to glucomannan; b) gradually adding bran to the mixture of glucomannan and fine bran mixing until homogeneity is reached; c) adding water at a temperature between 45° and 55°C to bring the mixture humidity to about 33÷34%, kneading for about 20'; c) pouring off the knead in the load hopper of an extruder drawing it at a pression of 110 Bar; d) passing the extruded knead in a desiccation tunnel at about 65°÷75°C for a first period of 30'; e) completing the desiccation step through a second period of 12 hours at 55°÷65°C.

Obviously hard corn bran and fine bran can be substituted by any other suitable bran or fiber.

## Claims

1. Composition of a dietetic food in the form of an alimentary pasta with high contents in alimentary fiber and reduced caloric contents, for persons on a hypocaloric diet or with intestinal diseases, that essentially comprises the following ingredients in the following percentages of weight:
Hard corn bran 82÷88%
Glucomannan 3÷1%
Fine bran of toasted hard corn 15÷11%
Water 45÷55 kgs per 100 kgs of
The above mixture

2. The composition of claim 1 of a dietetic food in the form of an alimentary pasta, particularly comprising:
Hard corn bran 86%
Glucomannan 2%
Fine bran of toasted hard corn 12%

3. A method for obtaining an alimentary pasta with high contents in alimentary fiber and reduced caloric contents, using the ingredients according to claim 1, comprising the following steps: a) adding fine bran to glucomannan; b) gradually adding bran to the mixture of glucomannan and fine bran, mixing until homogeneity is reached; c) adding water at a temperature between 45° and 55°C, to bring the mixture humidity to about 33÷34%; kneading for about 20'; d) pouring off the knead in the load hopper of an extruder drawing it at a pression of 110 Bar; as it is usual for the production of almost all kinds of the normal alimentary pasta; d) passing the extruded knead in a desiccation tunnel at about 65°÷70°C for a first period of 30'; f) completing the desiccation step through a second desiccation period of 12 hours at 55°÷65°C.

## Patentansprüche

1. Zusammensetzung eines diätetischen Nahrungsmittels in Form einer Ernährungspasta mit hohem Gehalt an Ernährungsfaserstoffen und reduziertem Kaloriengehalt für auf Niederkaloriendiät gesetzte oder mit Eingeweidekrankheiten belastete Personen, bestehend aus folgenden, in Gewichts-% angegebenen Zutaten:
Hartkornkleie 82 - 88 %
Glucomannan 3 - 1 %
geröstete Hartkornfeinkleie 15 - 11 %
Wasser 45 - 55 kp pro 100 kg der obigen Mischung.

2. Die Zusammensetzung nach Anspruch 1 eines diätetischen Nahrungsmittels in Form einer Ernährungspasta, insbesondere enthaltend
Hartkornkleie 86 %
Gluvomannan 2 %
geröstete Hartkornfeinkleie 12 %.

3. Ein Verfahren zur Herstellung einer Ernährungspasta mit hohem Gehalt an Ernährungsfaserstoffen und reduziertem Kaloriengehalt unter Verwendung der Zutaten gemäß Anspruch 1 und mit folgenden Schritten:
a) Zugabe der Feinkleie zum Glucomannan; b) graduelle Zugabe der Kleie zur Mischung aus Glucomannan und Feinkleie und Mischung bis Homogenität erreicht ist; c) Zugabe von Wasser mit einer Temperatur zwischen 45° und 55°, um die Mischungsfeuchtigkeit auf 33 - 39 % zu bringen und Kneten für 20'; d) Eingeben der Knetmasse in die Aufgabe eines Exruders und mit Druck von 110 bar beaufschlagen, wie es für die Herstellung aller Arten von normalen Ernährungspastas üblich ist; e) Durchleitung der extrudierten Knetmasse durch einen Trocknungstunnel mit ca 65° - 70° für eine erste Periode von 30'; f) Vervollständigung der Trocknung durch eine zweite Trocknungsperiode von 12 Std. bei 55° bis 65° C.

## Revendications

1. Composition alimentaire diététique sous forme d'une pâte alimentaire à teneur élevée en fibres alimentaires et à teneur réduite en calories, destinée à des personnes suivant un régime hypocalorique ou souffrant de troubles intestinaux, comprenant essentiellement les ingrédients suivants, selon la pourcentages pondéraux suivants:
- son de blé dur 82 à 88%
- glucomannane 3 à 1%
- son fin de blé dur grillé 15 à 11%
- eau 45 à 55 kg pour 100 kg de mélange

2. La composition alimentaire diététique selon la revendication 1, sous forme d'une pâte alimentaire, consistant particulièrement en :
- son de blé dur 86%
- glucomannane 2%
- son fin de blé dur grillé 12%

3. Un procédé d'obtention d'une pâte alimentaire à teneur élevée en fibres alimentaires et à teneur réduite en calories, utilisant les ingrédients selon la revendication 1, consistant en les étapes suivantes:
(a) addition de son fin au glucomannane;
(b) addition progressive de son au mélange de glucomannane et de son fin, le mélange étant poursuivi jusqu'à l'obtention de l'homogénéité;
(c) addition d'eau à une température comprise entre 45 et 55°C, de façon à amener le taux d'humidité du mélange à environ 33 à 34%; malaxage pendant environ 20 minutes;
(d) chargement de la pâte malaxée dans la trémie d'alimentation d'une extrudeuse et on l'amène à une pression de 110 bars, comme cela est habituel dans la préparation de la plupart des pâtes alimentaires normales;
(e) passage de la pâte malaxée extrudée dans un tunnel de dessication à une température d'environ 65 à 70°C. pendant une première période de 30 minutes;
(f) on complète l'étape de dessication par une seconde étape de dessication de 12 heures, à une température de 55 à 65°C.
